**Europäisches Patentamt**

**European Patent Office**

**Office européen des brevets**

(19)

(11) Veröffentlichungsnummer: **0 416 228 A1**

# EUROPÄISCHE PATENTANMELDUNG

(12)

(21) Anmeldenummer: **90111969.3**

(22) Anmeldetag: **23.06.90**

(51) Int. Cl.⁵: **F16M 7/00**

(30) Priorität: **28.07.89 DE 3925167**

(43) Veröffentlichungstag der Anmeldung:
**13.03.91 Patentblatt 91/11**

(84) Benannte Vertragsstaaten:
**AT BE CH DE DK ES FR GB GR IT LI LU NL SE**

(71) Anmelder: **Bizaj, Ernst**
**Bahnhofstrasse 11**
**CH-8832 Wollerau(CH)**

(72) Erfinder: **Bizaj, Ernst**
**Bahnhofstrasse 11**
**CH-8832 Wollerau(CH)**

(74) Vertreter: **Säger, Manfred, Dipl.-Ing.**
**Säger & Partner Postfach 81 08 09**
**W-8000 München 81(DE)**

(54) **Vorrichtung zur Befestigung eines Gegenstandes, insbesondere einer Werkzeugmaschine, im Fundament.**

(57) Zur Befestigung eines Gegenstandes (2) im Fundament (1) wird über einbetonierte Ankerschrauben (5) eine Grundplatte (3) mit dem Fundament (1) verbunden, in welcher ein Schraubenbolzen (21 bzw. 31) in horizontaler Ebene positionierbar eingebaut ist. Der Gegenstand (2) wird über den Schraubenbol- zen (21 bzw. 31) mit der Grundplatte (3) verschraubt. Somit können die Distanzen einzelner Befestigungs- stellen exakt den Distanzen einzelner Fussbohrun- gen (8) im Gegenstand (2) angepasst werden.

Fig. 1

# VORRICHTUNG ZUR BEFESTIGUNG EINES GEGENSTANDES, INSBESONDERE EINER WERKZEUGMASCHINE, IM FUNDAMENT.

Die Erfindung betrifft eine Vorrichtung zur Befestigung eines Gegenstandes, insbesondere einer Werkzeugmaschine, im Fundament, mit in das Fundament eingesetzten Ankerschrauben.

Es ist bekannt und üblich, Gegenstände wie Maschinen und Apparate mit Hilfe von Ankerschrauben direkt mit dem Fundament, meistens dem Betonboden, zu verbinden. Zu diesem Zweck werden die Ankerschrauben im Fundament einbetoniert und der mit Fussbohrungen versehene Gegenstand auf diese gesetzt und verschraubt.

Diese Befestigungs- bzw. Verankerungsart hat den Nachteil, dass die Distanzen einzelner Ankerschrauben den Distanzen einzelner Fussbohrungen entsprechen müssen. Beim Einbetonieren der Ankerschrauben ist es nämlich schwierig, deren Distanzen derart exakt einzuhalten. Oft werden die Ankerschrauben leicht schräg in das Fundament eingesetzt, wodurch das Distanzeinhalten beeinträchtigt wird. Die Befestigung der Gegenstände, insbesondere derer, die grössere Längen aufweisen, wird dadurch erheblich erschwert. Es können Verspannungen im Chassis eintreten, die sich beispielsweise bei Präzisionswerkzeugmaschinen auf die Herstellungsgenauigkeit negativ auswirken können.

Der Erfindung liegt die Aufgabe zugrunde, eine Befestigungsvorrichtung der eingangs genannten Art zu schaffen, die die Uebereinstimmung der Distanzen einzelner Befestigungsstellen mit dem Fundament mit den Distanzen der Fussbohrungen des Gegenstandes ermöglicht und bei der die Verspannungsgefahr vermieden wird.

Erfindungsgemäss wird diese Aufgabe dadurch gelöst, dass mittels der Ankerschrauben eine Grundplatte am Fundament befestigt ist und dass der Gegenstand mit der Grundplatte über einen in horizontal er Ebene positionierbaren Schraubenbolzen verbindbar ist. Zwei Ausführungsbeispiele des Erfindungsgegenstands sind in der Zeichnung dargestellt und im folgenden näher beschrieben.

Es zeigen:

Fig. 1 einen vertikalen Längsschnitt durch eine Vorrichtung zur Befestigung eines Gegenstandes im Fundament nach dem ersten Beispiel

Fig. 2 eine Ansicht von oben auf die Vorrichtung nach dem ersten Beispiel mit teilweise weggeschnittenem Gegenstand

Fig. 3 einen Schnitt nach Linie III - III in Fig. 2

Fig. 4 einen vertikalen Längsschnitt durch eine Vorrichtung nach dem zweiten Beispiel

Fig. 5 einen Schnitt nach Linie V - V in Fig. 4

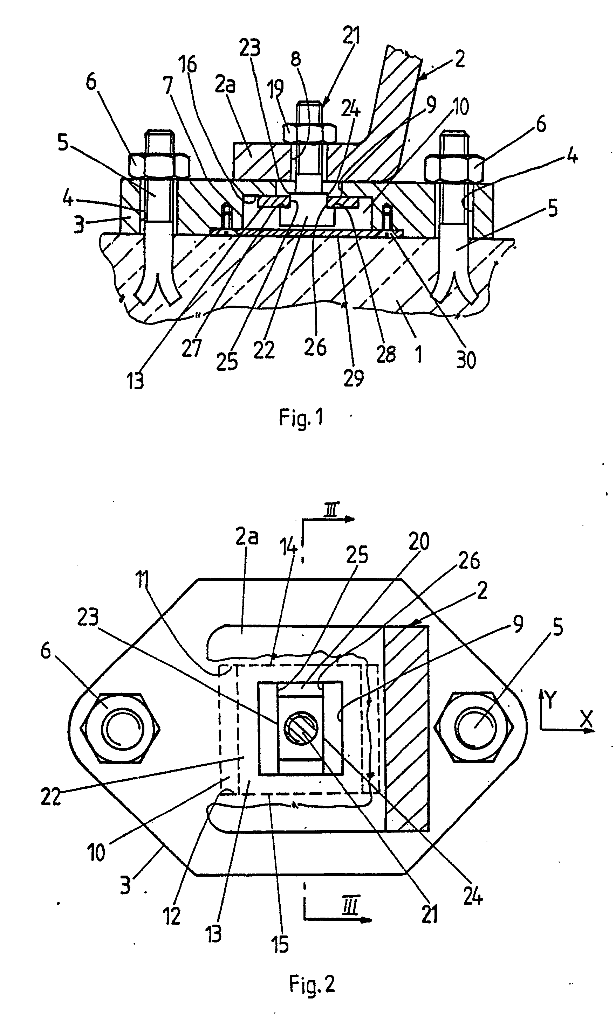

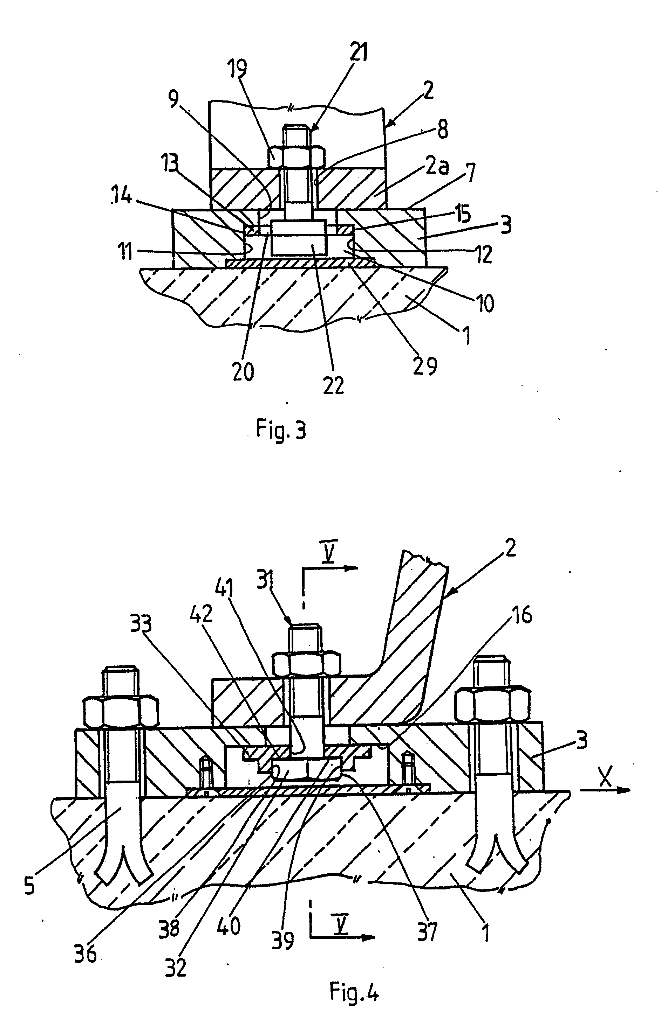

In Figur 1 und 3 ist das Fundament, in welchem ein Gegenstand 2 verankert werden soll, mit 1 bezeichnet. Vom Gegenstand 2 selber ist in der Zeichnung lediglich sein Fuss 2a dargestellt. Es kann sich dabei beim Gegenstand 2 beispielsweise um eine Werkzeugmaschine handeln, es könnte aber auch eine andere Maschine, Apparat oder Halterung sein.

Zwischen dem Gegenstand 2 und dem Fundament 1 ist eine Grundplatte 3 angeordnet, deren Form aus Fig. 2 ersichtlich ist. Die Grundplatte 3 weist gemäss Fig. 1 zwei Bohrungen 4 zur Aufnahme von Ankerschrauben 5 auf. Mit Hilfe der Ankerschrauben 5 und den zugeordneten Muttern 6 ist die Grundplatte 3 mit dem Fundament 1 fest verbunden. Der Fuss 2a des Gegenstandes 2 ist auf einer oberen Tragfläche 7 der Grundplatte 3 abgestützt. Eine Fussbohrung ist mit 8 bezeichnet.

Die Grundplatte 3 ist mit einer rechteckförmigen Oeffnung 9 versehen, die in eine dem Fundament 1 zugewandte Aussparung 10 mündet. An Längswänden 11, 12 der Aussparung 10 kann eine Kulisse 13 mit ihren Seitenflächen 14, 15 in Richtung X verschoben werden (siehe Fig. 2 und 3).

Die Kulisse 13 ist mit einer zentralen, rechteckförmigen Ausnehmung 20 ver- sehen. In die Ausnehmung 20 ragt ein T-förmiger Kopf 22 eines Schraubenbolzens 21 hinein und ist mit seinen Nutensteinflächen 23, 24 an Führungsflächen 25, 26 der Ausnehmung 20 in Richtung Y (Fig. 2) verschiebbar.

Die Kulisse 13 ist über Stirnflächen 27, 28 des T-förmigen Kopfes 22 an eine obere Stützfläche 16 der Aussparung 10 andrückbar.

Dem durch die Ausnehmung 20 der Kulisse 13, die Oeffnung 9 der Grundplatte 3 und die Fussbohrung 8 hindurchragenden Schraubenbolzen 21, ist eine Mutter 19 zugeordnet.

Von unten ist die Aussparung 10, in welcher sich der T-förmige Kopf 22 des Schraubenbolzens 21 und die Kulisse 13 befinden, durch eine Deckplatte 29 mittels Schrauben 30 verschlossen.

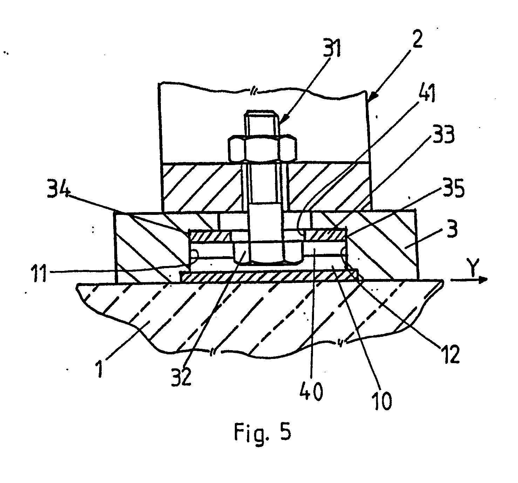

Bei dem in Fig. 4 und 5 dargestellten Ausführungsbeispiel der erfingungsgemässen Vorrichtung ist in der Aussparung 10 der Grundplatte 3 eine aus einem Profil angefertigte Kulisse 33 eingebaut, deren Seitenflächen 34, 35 den Längswänden 11, 12 der Aussparung 10 zugeordnet sind. Die Kulisse 33 kann in Richtung X (Fig. 4) verstellt werden. Die Kulisse 33 weist eine zentrale Oeffnung 41 auf, die in eine durch den inneren Teil des Profils gebildete, U-förmige Ausnehmung 40 mündet. Die Ausnehmung 40 weist zwei gegenüberliegende Führungsflächen 38, 39 auf.

Ein Schraubenbolzen 31 ist mit einem mehrkantförmigen (gegebenenfalls mit einem sechskantförmigen) Kopf 32 versehen, dessen zwei gegenüberliegenden Flächen 36, 37 den Führungsflächen 38, 39 angeordnet sind. Ueber diese Flächen kann der Schraubenbolzen 31 in Richtung Y (Fig. 5) im Bereich der Oeffnung 41 verstellt werden. Beim Anziehen der Mutter 19 wird die Kulisse 33 über eine Stirnfläche 42 des Schraubenbolzens 31 an die obere Stützfläche 16 der Aussparung 10 gedrückt.

Aus dem beschriebenen Aufbau ergibt sich folgende Wirkungsweise.

Zur Befestigung des Gegenstandes 2 am Fundament 1 nach dem ersten Beispiel wird zuerst an jeder vorgesehenen Befestigungsstelle jeweils eine Grundplatte 3 mit einem bereits eingebauten Schraubenbolzen 21 über die Ankerschrauben 5 mit dem Fundament 1 verbunden. Dabei ist der Schraubenbolzen 21 einerseits durch die Deckplatte 29, andererseits durch die Kulisse 13 gegen Herausfallen aus der Grundplatte 3 gesichert.

Die Einbetonierung der Ankerschrauben 5 im Fundament 1 kann ohne grosse Exaktheit erfolgen, da die Distanzen der Zentren von einzelnen Grundplatten 3, in welchen sich die einzelnen Schraubenbolzen 21 befinden, nur relativ grob den Distanzen einzelner Fussbohrungen 8 entsprechen müssen. Eine feinere Anpassung einzelner Distanzen erfolgt an jeder Befestigungsstelle durch Verstellen einzelner Schraubenbolzen 21 in den X- und Y-Richtungen. Die Positionierung in der Y-Richtung wird durch Verstellen des T-förmigen Kopfes 22 in der Ausnehmung 20 der Kulisse 13 realisiert. Die Positionierung in Richtung X erfolgt durch Verstellen der Kulisse 13 entlang der Längswänden 11, 12 der Aussparung 10 der Grundplatte 3. Nun kann der Gegenstand 2 mit seinen Füssen 2a exakt auf die einzelnen Schraubenbolzen 21 aufgesetzt und auf die Grundplatten 3 gelegt werden. Beim Anziehen der Mutter 19 sichern die Führungsflächen 25, 26 der Ausnehmung 20 in der Kulisse 13 sowie die Längswände 11, 12 der Aussparung 10 in der Grundplatte 3 den Schraubenbolzen 21 und die Kulisse 13 gegen Verdrehen. Ueber die Stirnflächen 27, 28 drückt der Schraubenbolzen 21 die Kulisse 13 nach oben gegen die obere Stützfläche 16. Die Position der verstellbaren Elemente ist somit fixiert und die Verbindung des Gegenstandes 2 mit der im Fundament 1 verankerten Grundplatte 3 hergestellt.

Die Vorrichtung nach dem zweiten Ausführungsbeispiel funktioniert in ähnlicher Weise. Die Verwendung eines lieferungsfertigen Profils für die Kulisse 33 bedeutet eine zusätzliche Vereinfachung.

In der Zeichnung sind sowohl der T-förmige Kopf 22, als auch der mehrkantförmige Kopf 32 und der dazugehörende Schraubenbolzen 21 bzw. 31 einteilig ausgebildet. Es könnte sich allerdings auch um mit den Schraubenbolzen 21, 31 verschraubte Mutterteile handeln. Aus Montagegründen könnte es nämlich unter Umständen von Vorteil sein, nur die Mutterteile in der Grundplatte 3 einzubauen und die Schraubenbolzen erst nach dem Aufsetzen des Gegenstandes 2 auf die Grundplatte 3 hineinzufügen.

**Ansprüche**

1. Vorrichtung zur Befestigung eines Gegenstandes, insbesondere einer Werkzeugmaschine im Fundament, mit in das Fundament eingesetzten Ankerschrauben, wobei mittels der Ankerschrauben (5) eine Grundplatte (3) am Fundament (1) befestigt ist und wobei der Gegenstand (2) mit der Grundplatte (3) über einen in einer horizontalen Ebene positionierbaren Schraubenbolzen (21 bzw. 31) verbindbar ist,
**dadurch gekennzeichnet,**
daß in der Grundplatte (3) eine Kulisse (13 bzw. 33) in einer in Draufsicht im wesentlichen rechteckförmigen Aussparung (10) in einer horizontalen X-Richtung der horizontalen Ebene verstellbar ist und daß die Kulisse (13 bzw. 33) eine Ausnehmung (20 bzw. 40) aufweist, in welcher der Schraubenbolzen (21 bzw. 31) in einer zu der X-Richtung winkligen Y-Richtung der horizontalen Ebene verstellbar ist.

2. Vorrichtung nach Anspruch 1,
**dadurch gekennzeichnet,**
daß die Kulisse (13 bzw. 33) Seitenflächen (14, 15 bzw. 34, 35) aufweist, die Längswänden (11, 12) eine Aussparung (10) in einer Grundplatte (3) zugeordnet sind.

3. Vorrichtung nach Anspruch 1,
**dadurch gekennzeichnet,**
daß der Schraubenbolzen (21) mit einem T-förmigen Kopf (22) versehen ist, dessen Nutensteinflächen (23, 24) Führungsflächen (25, 26) der Ausnehmung (20) zugeordnet sind.

4. Vorrichtung nach Anspruch 1,
**dadurch gekennzeichnet,**
daß der Schraubenbolzen (31) mit einem mehrkantförmigen Kopf (32) versehen ist, dessen zwei gegenüberliegenden Flachen (36, 37) Führungsflächen (38, 39) der Ausnehmung (40) zugeordnet sind.

5. Vorrichtung nach einem der Ansprüche 2 bis 4,
**dadurch gekennzeichnet,**
daß der Schraubenbolzen (21 bzw. 31) durch die Ausbildung des Kopfes (22), der Kulisse (13 bzw 33) und der Aussparung (10) der Grundplatte (3) gegen Verdrehen gegenüber der Grundplatte (3) gesichert ist.

6. Vorrichtung nach einem der Ansprüche 1 bis 5,
**dadurch gekennzeichnet,**
daß anstelle des Schraubenbolzens ein Mutterteil in die Grundplatte eingesetzt wird.

Fig. 1

Fig. 2

Fig. 3

Fig. 4

Fig. 5

**Europäisches Patentamt**

**EUROPÄISCHER RECHERCHENBERICHT**

Nummer der Anmeldung

**EP 90 11 1969**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | NL-C-7 962 3 (BERGMAN) <br> * Spalte 1, Zeile 46 - Spalte 2, Zeile 12; Figuren 1,2 * <br> — — — | 1,2,5,6 | F 16 M 7/00 |
| Y | BE-A-6 763 71 (RHEMREV) <br> * Seite 5, Zeile 12 - Seite 7, Zeile 5; Figuren 1-4 * <br> — — — | 1,2,5,6 | |
| A | FR-A-1 134 881 (ADJUSTABLE ANCHOR CORP.) <br> * Seite 3, linke Spalte, Zeilen 23-39; Figuren 1,2 * <br> — — — | 3,5 | |
| A | US-A-2 940 297 (RICHLAND) <br> * Spalte 3, Zeilen 63-69; Figuren 2-5 * <br> — — — — — | 4 | |

| | | | RECHERCHIERTE SACHGEBIETE (Int. Cl.5) |
|---|---|---|---|
| | | | F 16 M |

Der vorliegende Recherchenbericht wurde für alle Patentansprüche erstellt

| Recherchenort | Abschlußdatum der Recherche | Prüfer |
|---|---|---|
| Den Haag | 30 November 90 | BARON C. |